# EUROPEAN PATENT APPLICATION

(11) **EP 2 597 818 A1**
(43) Date of publication of application: **29.05.2013**
(21) Application number: 10854966.8
(22) Date of filing: 28.12.2010
(51) Int. Cl.: H04L 12/28

(54) **CLUSTER MANAGEMENT SYSTEM AND METHOD**

(30) Priority: 21.07.2010 CN 201010236219
(71) Applicant: ZTE Corporation, Shenzhen, Guangdong 518057 (CN)
(72) Inventor: HU, Liangjun, Guangdong 518057 (CN); QUAN, Rui, Guangdong 518057 (CN)
(74) Representative: Novagraaf Technologies
(86) International application number: PCT/CN2010/080402
(87) International publication number: WO 2012/009936

(57) **Abstract**

A cluster management system and method are disclosed in the disclosure. The system includes: a storage module configured to store process identifiers of more than one process and communication addresses of the more than one process; more than one cluster management module in one-to-one correspondence with the more than one process, wherein each one of the more than one cluster management module is configured to obtain the communication addresses of other processes except the process corresponding to the cluster management module itself in the more than one process, and obtain services included in other processes by the communication addresses of other processes; more than one service management module in one-to-one correspondence with the more than one cluster management module, wherein each one of the more than one service management module is configured to obtain the services included in other processes from the cluster management module corresponding to the service management module itself, and call the services included in other processes. The disclosure can ensure normal use of services and improve management capacity of network management.

## Description

### Technical Field of the Invention

The disclosure relates to the communication field, and more particularly, to a cluster management system and method.

### Background of the Invention

A cluster management system may be divided into multiple subsystems: a performance management subsystem, an alarm management subsystem and a security management subsystem etc One subsystem may be further divided into multiple functional modules: a southbound module, a northbound module and a server processing module etc., wherein each module can be called as a service. The cluster management system is a system consisting of multiple services.

With the continuous development of communication technologies, scales of management networks are increasing. In addition, there are various types of management networks and each type of network is provided with its own network management system. In order to facilitate management, it is very necessary to implement unified management for various networks, which raises very high requirements on the management capacity of the network management system and the performance thereof.

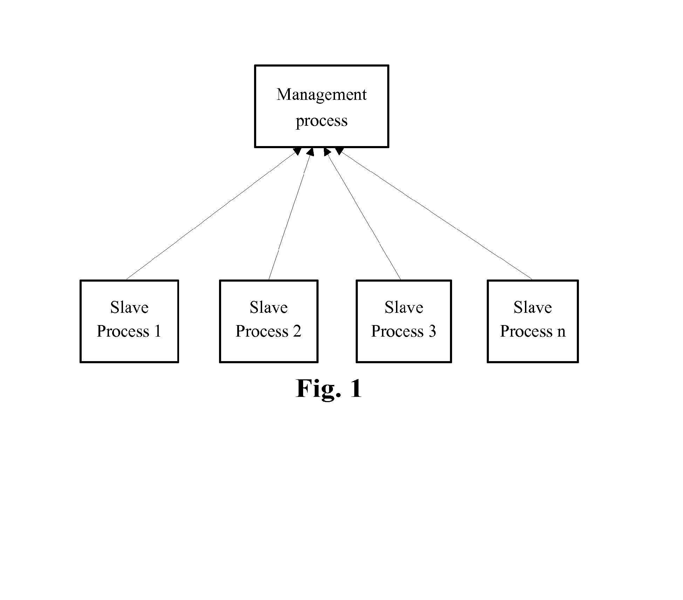

In order to solve the problem, distributed design is generally applied in related technologies, namely, services of network management are operated on multiple host computers in a distributed manner, and the network management capacity is increased by utilizing hardware resources of multiple machines. Fig. 1 is a schematic diagram illustrating a deployment structure of a cluster management system according to a related technology, including a management process and multiple slave processes, wherein states of all slave processes in the system are controlled by the management process to improve the management capacity of network management.

However, such a structure in which multiple slave processes are managed by a management process has very high requirement on the reliability of the management process, because the whole cluster management system can not work once the management process fails.

### Summary of the Invention

The disclosure is put forward to solve the problem in a related technology that a management process and multiple slave processes are applied in a cluster management system and the whole cluster management system can not work once the management process fails. Therefore, the one objective of the disclosure is to provide a cluster management system and method to solve the problem above.

To realize the objective above, according to an aspect of the disclosure, a cluster management system is provided.

The cluster management system according to the disclosure comprising: a storage module, configured to store process identifiers of more than one process and communication addresses of the more than one process; more than one cluster management module in one-to-one correspondence with the more than one process, wherein each one of the more than one cluster management module is configured to obtain from the storage module the communication addresses of other processes except the process corresponding to the cluster management module itself in the more than one process, and obtain services included in the other processes by using the communication addresses of the other processes; more than one service management module in one-to-one correspondence with the more than one cluster management module, wherein each one of the more than one service management module is configured to obtain services included in the other processes from the cluster management module corresponding to the service management module itself, and call the services included in the other processes.

Further, the cluster management system further comprises: more than one monitoring module in one-to-one correspondence with the more than one service management module and configured to record available information of services included in the other processes and obtained by the service management module corresponding to the monitoring module itself, wherein the available information is configured to indicate that the services included in the other processes are available or unavailable; each one of the more than one service management module is further configured to receive available information of the monitoring module corresponding to the service management module itself, and further configured to call the services included in the other processes according to the available information.

Further, the cluster management system further comprises: more than one timer in one-to-one correspondence with the more than one cluster management module; each one of the more than one cluster management module is further configured to, when the timer corresponding to the cluster management module itself expires, send detection messages to other cluster management modules except the cluster management module itself in the more than one cluster management module, wherein the detection messages are configured to detect connection relation between the other cluster management modules and the cluster management module itself; and each one of the more than one cluster management module is further configured to, when it is detected that a response message or response messages from one or more cluster management modules in the other cluster management modules are not received, delete the process or processes corresponding to the one or more cluster management modules.

Further, each one of the more than one cluster management module is further configured to write the communication address of the process corresponding to the cluster management module itself into the storage module.

Further, the cluster management system further comprises: a determining module, configured to determine whether or not the process identifier or process identifiers of one or more processes in the more than one process have been stored in the storage module; an updating module, configured to update the communication address or communication addresses of one or more processes when the determination result is yes, wherein the communication address includes at least one of the following: an Internet Protocol (IP) address and monitoring port information.

Further, the more than one cluster management module communicate with each other via User Date Protocol (UDP).

Further, each one of the more than one cluster management module is further configured to manage a service included in a process of the cluster management module corresponding to itself.

To realize the objective above, according to another aspect of the disclosure, a cluster management method is provided.

The cluster management method according to the disclosure comprises: obtaining, by a cluster management module, communication addresses of other processes except a process corresponding to the cluster management module itself in more than one process from a storage module; using, by the cluster management module, the communication addresses of the other processes to obtain services included in the other processes, and sending, by the cluster management module, the services to a service management module corresponding to the cluster management module itself; calling the services included in the other processes by the service management module.

Further, before the service management module calls the services included in the other processes, the method further comprises: recording, by a monitoring module, available information of services included in the other processes and obtained by the service management module corresponding to the monitoring module itself, wherein the available information is configured to indicate that the services included in the other processes are available or unavailable; sending the available information to the service management module by the monitoring module; performing an operation of calling the services included in the other processes according to the available information by the service management module.

Further, before the cluster management module obtains from the storage module the communication addresses of the other processes except the process corresponding to the cluster management module itself in the more than one process, the method further comprises: when a timer corresponding to the cluster management module itself expires, sending, by the cluster management module, detection messages to other cluster management modules except the cluster management module itself in the more than one cluster management module, wherein the detection messages are configured to detect connection relations between the other cluster management modules and the cluster management module itself; when it is detected that a response message or response messages from one or more cluster management modules in the other cluster management modules are not received, deleting the process or processes corresponding to one or more cluster management modules by the cluster management module.

Further, before the cluster management module obtains from the storage module the communication addresses of the other processes except the process corresponding to the cluster management module itself in the more than one process, the method further comprises: writing, by the cluster management module, the communication address of the process corresponding to the cluster management module itself into the storage module.

Through the disclosure, the clustered and distributed design is applied to solve the problem in a related technology that a management process and multiple slave processes are applied in a cluster management system and the whole cluster management system can not work once the management process fails, thus ensuring normal use of services and improving management capability of network management.

### Brief Description of the Drawings

The accompanying drawings illustrated here provide further understanding to the disclosure and constitute a part of the application. The exemplary embodiments of the disclosure and the illustrations thereof are used for explaining the disclosure, instead of constituting an improper limitation to the disclosure. In the accompanying drawings:
Fig. 1 is a schematic diagram illustrating a deployment structure of a cluster management system according to a related technology;
Fig. 2 is a structural diagram illustrating a cluster management system according to an embodiment of the disclosure;
Fig. 3 is a schematic diagram illustrating a deployment structure of a cluster management system according to a preferred embodiment of the disclosure;
Fig. 4 is a flowchart illustrating a cluster management method according to an embodiment of the disclosure; and
Fig. 5 is an interactive flowchart illustrating a cluster management method according to a preferred embodiment of the disclosure.

### Detailed Description of the Embodiments

It should be noted that, if there is no conflict, the embodiments in the application and the features in the embodiments can be combined with each other. The disclosure will be described in details below with reference to the accompanying drawings and in combination with the embodiments.

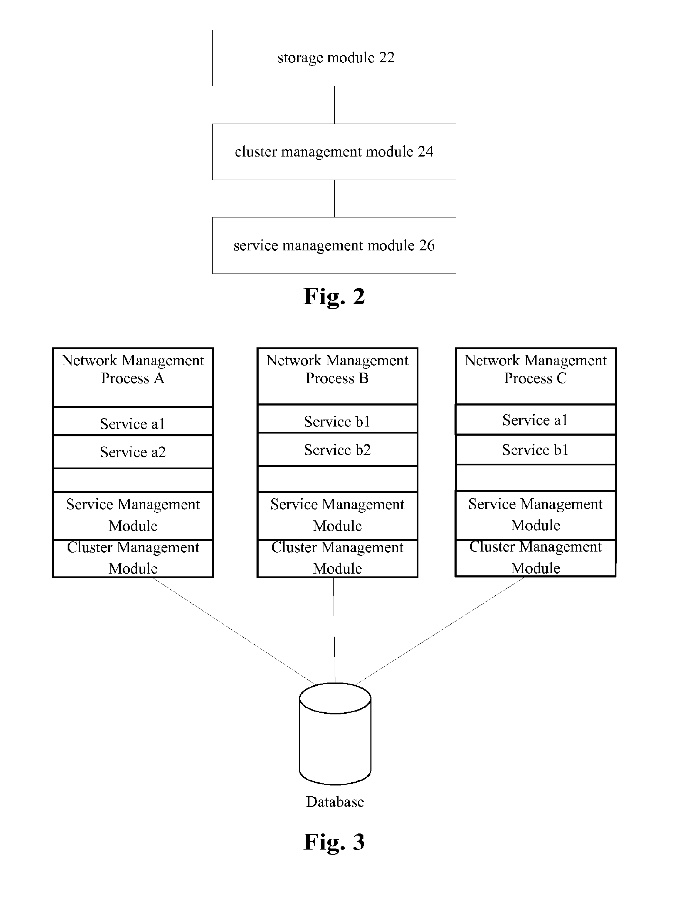

According to the embodiments of the disclosure, a cluster management system is provided. Fig. 2 is a structural diagram illustrating a cluster management system according to an embodiment of the disclosure, comprising a storage module 22, a cluster management module 24 and a service management module 26. The structure of the cluster management system is described in details below.

The storage module 22 is configured to store process identifiers of more than one process and communication addresses of the more than one process.

more than one cluster management module 24 are connected to the storage module 22 and in one-to-one correspondence with the more than one process, wherein each cluster management module 24 of the more than one cluster management module 24 is configured to obtain, from the storage module 22, communication addresses of other processes except a process corresponding to the cluster management module 24 itself in the more than one process, and obtain services included in the other processes by using the communication addresses of the other processes.

more than one service management module 26 are in one-to-one correspondence with the more than one cluster management module 24 and connected to the corresponding cluster management module 24 respectively, wherein each service management module 26 in the more than one service management module 26 is configured to manage a service included in a process corresponding to the cluster management module 24 which corresponds to the service management module 26 itself, and is configured to obtain services included in other processes from the cluster management module 24 which corresponds to the service management module 26 itself, and is configured to call the services included in the other processes.

In a related technology, a management process and multiple slave processes are applied in a cluster management system. Thus, the whole cluster management system can not work once the management process fails. In the embodiments of the disclosure, the clustered and distributed design is applied, each process is able to obtain services included in the other processes via the cluster management module 24, so that when a certain process fails, other process in which the service exists can be selected and then normal use of the service can be ensured by calling the service in the other process.

It should be noted that the storage module 22 can be a database.

It should be noted that, regarding the service management module 26 is configured to manage a service included in a process corresponding to the cluster management module 24 which corresponds to the service management module 26 itself, the managing manner thereof can refer to the managing manner for a management process and multiple slave processes in a related technology.

It should be noted that, in order to improve load, one service may exists in different processes. When a command is sent to the service, the service management module determines a process to which process the command is sent to for processing.

Preferably, the cluster management system further comprise: more than one monitoring module 28, which are in one-to-one correspondence with the more than one service management module 26 and are configured to record available information of services included in the other processes and obtained by the service management modules 26 corresponding to themselves, wherein the available information is configured to indicate that the services included in the other processes are available or unavailable; each service management module 26 of the more than one service management module 26 is further configured to receive available information of the monitoring module 28 corresponding to the service management module 26 itself, and further configured to call the services included in the other processes according to the available information.

In the present preferred embodiment, the monitoring module 28 records the available information of the services included in the other processes, which can provide support for an operation called by the service management module 26, so that the service management module 26 selects an other process in which a certain service exists, and then calls the service in the other process to ensure normal use of the service.

Preferably, the cluster management system further comprise: more than one timer in one-to-one correspondence with the more than one cluster management module 24; each cluster management module 24 of the more than one cluster management module 24 is further configured to, when the timer corresponding to the cluster management module 24 itself expires, send detection messages to other cluster management modules 24 except the cluster management module 24 itself in the more than one cluster management module 24, wherein the detection messages are configured to detect connection relation between the other cluster management modules 24 and the cluster management module 24 itself; and each cluster management module 24 of the more than one cluster management module 24 is further configured to, when it is detected that a response message or response messages from one or more cluster management modules 24 in the other cluster management modules 24 are not received, delete the process or processes corresponding to the one or more cluster management modules 24.

In the present preferred embodiment, communication detection is performed mutually among the cluster management modules 24 via the detection messages, so as to accurately delete the process or processes corresponding to the one or more cluster management modules 24 in which a communication problem exists. At the same time, the timers can be further configured to control the frequency of sending the detection messages by the cluster management modules 24, thus avoiding the impact on the communication network caused by sending the detection messages too frequently.

Preferably, each cluster management module 24 of the more than one cluster management module is further configured to write the communication address of the process corresponding to the cluster management module 24 itself into the storage module 22.

In the present preferred embodiment, each cluster management module 24 of the more than one cluster management module 24 writes the communication address of the process corresponding to the cluster management module 24 itself into the storage module 22, so that the communication address can be obtained by the other cluster management modules 24, which is beneficial for each cluster management module 24 to perform communication for the service included in the process corresponding to itself, thus realizing disaster tolerance for each two of them.

Preferably, the cluster management system further comprises a determining module configured to determine whether or not a process identifier or process identifiers of one or more processes in the more than one process have been stored in the storage module; an updating module configured to update the communication address of one or more processes when the determination result is yes, wherein the communication address includes at least one of the following: an Internet Protocol (abbreviated as IP) address and monitoring port information.

Preferably, the communication is performed among the more than one cluster management module via User Data Protocol (abbreviated as UDP).

In the present preferred embodiment, a non-connection UDP communication protocol is applied to reduce the occupation of resource.

Preferably, each cluster management module of the more than one cluster management module is further configured to manage a service of a process corresponding to a cluster management module which corresponds to the cluster management module itself.

The present invention further provides a preferred embodiment which combines technical solutions of multiple preferred embodiments above. Detailed description is given below in combination with Fig. 3.

Fig. 3 is a schematic diagram illustrating a deployment structure of a cluster management system according to a preferred embodiment of the disclosure. As shown in Fig. 3, network management processes A, B, C are connected to the same database. Each network management process includes cluster management modules, service management modules and several services. Each process monitors a UDP port and writes a UDP port number into the same database. After a cluster management module obtains IPs and ports of the other two processes from the database, A, B and C communicate with each other to obtain all service information and deliver the service information to a service management module. The service management module notifies a monitoring module that services including a1, a2, b1, and b2 are available currently. When a service needs to be called, taking the process A for example and assuming that the service b1 needs to be called, since b1 is provided in both the process B and the process C, the service management module calls either B or C according to a certain strategy. If the service b2 needs to be called, then only the process B can be called.

Further, the timing check is sent at a fixed time among the processes A, B and C via the cluster management module. If a process exits accidentally, the service management module removes services included in the process and informs the monitoring module that some services are unavailable. Assuming that B exits accidentally, then the monitoring module is informed that b2 is unavailable, b1 is still available because b1 still exists in the process C, and b1 can be called through the process C.

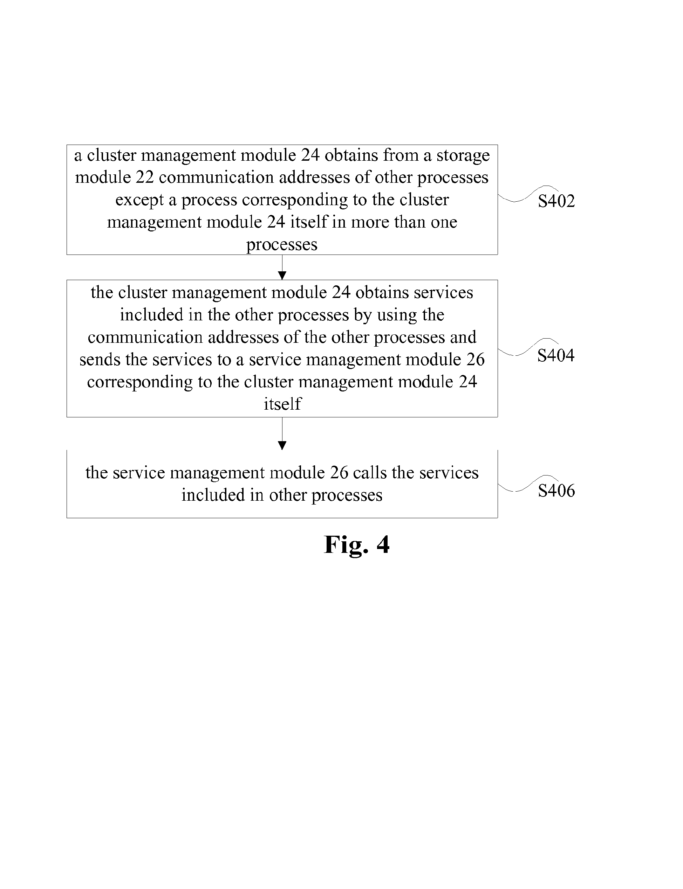

According to an embodiment of the disclosure, a cluster management method is further provided. The cluster management method can be realized based on the cluster management system above. Fig. 4 is a flowchart illustrating a cluster management method according to an embodiment of the disclosure, including the following Step 402 to Step 406.

Step 402: a cluster management module 24 obtains communication addresses of other processes except a process corresponding to the cluster management module 24 itself in more than one process from a storage module 22.

Step 404: the cluster management module 24 obtains services included in the other processes by using the communication addresses of the other processes and sends the services to a service management module 26 corresponding to the cluster management module 24 itself.

Step 406: the service management module 26 calls the services included in the other processes.

In a related technology, a management process and multiple slave processes are applied in a cluster management system. Thus, the whole cluster management system can not work once the management process fails. In the embodiments of the disclosure, the clustered and distributed design is applied, each process can obtain services included in other processes via a cluster management module 24, so that when a certain process fails, other process in which the service exists can be selected, and then the normal use of the service can be ensured by calling the service in the other process.

It should be noted that the storage module 22 can be a database.

It should be noted that, regarding the service management module 26 is configured to manage a service included in a process corresponding to the cluster management module 24 which corresponds to the service management module 26 itself, the managing manner thereof can refer to the managing manner for a management process and multiple slave processes in a related technology.

It should be noted that the service management module 26 further can manage a service included in a process corresponding to the cluster management module which corresponds to the service management module 26 itself.

Preferably, before the service management module 26 calls the services included in the other processes, a monitoring module 28 records available information of the services included in the other processes and obtained by the service management module 26 corresponding to the monitoring module 28 itself, wherein the available information is configured to indicate that the services included in the other processes are available or unavailable; the monitoring module 28 sends the available information to the service management module 26; the service management module 26 performs an operation of calling the services included in the other processes according to the available information.

In the present preferred embodiment, the monitoring module 28 records the available information of the services included in the other processes, which can provide support for the calling operation of the service management module 26 so that the service management module 26 selects the other process in which a service exists, and then calls the service in the other process to ensure normal use of the service.

Preferably, before the cluster management module 24 obtains from the storage module 22 the communication addresses of the other processes except the process corresponding to the cluster management module 24 itself in the more than one process, the cluster management module 24, when a timer corresponding to the cluster management module 24 itself expires, sends detection messages to other cluster management modules 24 except the cluster management module 24 itself in the more than one cluster management module 24, wherein the detection messages are configured to detect connection relations between the other cluster management modules 24 and the cluster management module 24 itself; the cluster management module 24, when it is detected that a response message from one or more cluster management modules 24 in the other cluster management modules 24 is not received, deletes a process or processes corresponding to one or more cluster management modules 24.

In the present preferred embodiment, the communication detection is performed mutually among the cluster management modules 24 via the detection messages, so as to accurately delete the process or processes corresponding to one or more cluster management modules 24 in which a communication problem exists. At the same time, the timers can be further configured to control the frequency of sending the detection messages by the cluster management modules 24, thus avoiding the impact on the communication network caused by sending the detection messages too frequently.

Preferably, before the cluster management module 24 obtains from the storage module 22 the communication addresses of the other processes except the process corresponding to the cluster management module 24 itself in the more than one process, the cluster management module 24 writes the communication address of the process corresponding to the cluster management module 24 itself into the storage module 22.

In the present preferred embodiment, each cluster management module 24 of the more than one cluster management module 24 writes the communication address of the process corresponding to the cluster management module 24 itself into the storage module 22 so that the communication address can be obtained by other cluster management modules 24, which is beneficial for each cluster management module 24 to perform communication for the service included in the process corresponding to itself, thus realizing disaster tolerance for each two of them.

Preferably, a cluster identifier is generated during installation. more than one process belonging to the same cluster provide a set of external service of network management, and the cluster identifiers of the more than one process are identical.

Preferably, a process identifier is generated during installation. The process identifier of each process is different. The process may be restarted and information of the process has existed in the storage module. The process identifier is used to determine whether the information of the process has existed, and if the information of the process has existed, the IP and the port information of the process are updated.

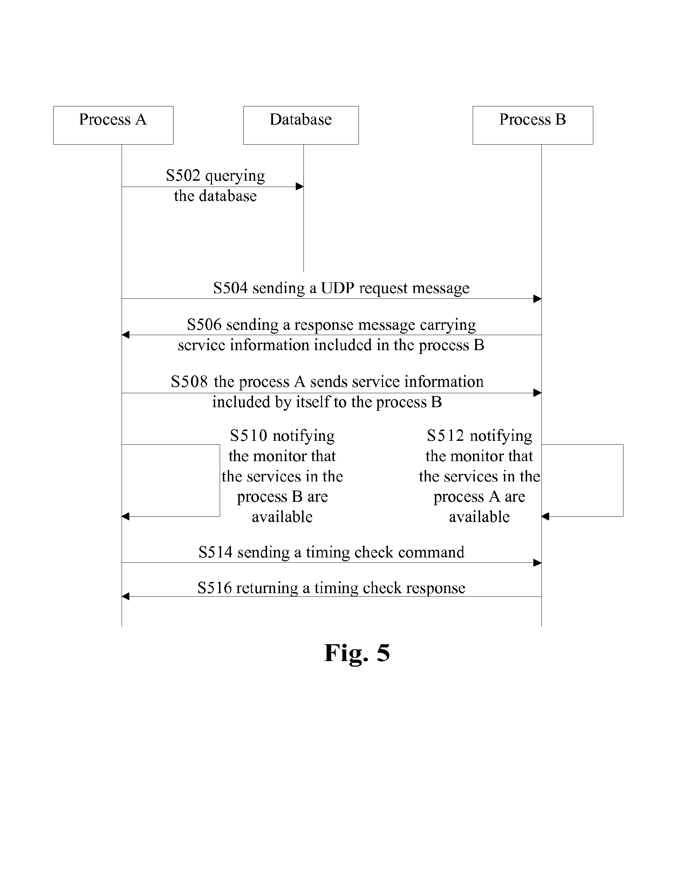

The disclosure further provides a preferred embodiment which combines technical solutions of the preferred embodiments above. Detailed description is given below in combination with Fig. 5.

Fig. 5 is an interactive flowchart illustrating a cluster management method according to a preferred embodiment of the disclosure, including the following Step 505 to Step 516.

Step 502: a database is queried after a process A starts, and a cluster identifier and a process identifier are used to determine whether information of the process A exists.

In the above, the process identifier and the cluster identifier are both generated during installation. Each process has a different process identifier and the cluster identifiers are the same in the same cluster.

If the information of the process A exists, then the communication IP of the process and the monitoring port information of the process are updated. If the information of the process A does not exist, the cluster identifier of the process A, the process identifier of the process A, the communication IP of the process and the monitoring port information of the process are written into the database and information of other processes in the cluster is obtained.

More specifically, a database list can be designed according to the following table 1 to facilitate the writing of the process A.

Table 1 is a schematic table of a database for writing a cluster identifier, a process identifier, a communication IP of a process and a monitoring port of the process

| | |
|---|---|
| CLUSTERID | Cluster Identifier (character string) |
| NODEID | Process Identifier (character string) |
| IP | Communication IP (character string) of Process |
| PORT | Monitoring Port (value) of Process |

Step 504: the process A sends a request message to other processes in the cluster.

It should be noted that it is assumed that the process A sends a UDP request message to a process B in the present preferred embodiment.

If TCP (Transmission Control Protocol) connection is applied and connections are established between each two of the processes, the total number of the connections is n*(n-1). There are too many connections in the case of many processes, which cause a lot of system resources consumed. Therefore, a command is delivered via a UDP manner without connection. The problem caused by UDP is that the message may be lost during the delivery and the solution is to retransmit a data packet. That is, after a data packet is transmitted, the next data packet will be transmitted after receiving acknowledgment of the other party. If the acknowledgment is not received within a certain time period, the data packet will be retransmitted. If the acknowledgment still fails to be received after several times of retransmission, it is regarded that the other party cannot be reached and the transmission is abandoned. It is assumed that the following commands are transmitted by UDP, wherein the processing manners thereof are same and not be repeated again.

Step 506: if the process B is normal, the process B sends a response message, wherein the content of the response message is the service information included in the process B.

Step 508: the process A sends the service information included by itself to the process B.

Step 510: the process A notifies a monitoring module that these services included in the process B are available.

Step 512: the process B notifies the monitoring module that these services included in the process A are available.

Step 514: the process A sends a timing check command to the process B.

Step 516: the process B returns a timing check response to the process A.

If the process A does not receive the timing check response after sending the timing check command for several consecutive times, the process A firstly determines that the process B has exited accidentally, then deletes the services included in the process B from a service management module and notifies the monitoring module that these services included in the process B are unavailable.

It should be noted that, in the case that the process A does not receive the timing check response after sending the timing check command for several consecutive times, the network between the process A and the process B may be disconnected. Under such case, the process B would also fail to receive the timing check response from the process A after sending the timing check command for several consecutive times, then the process B also determines that the process A is unavailable. At the moment, the process A and the process B both exist actually, and may provide part of the service functions independently. However, the process A and the process B are isolated from each other and cannot be called mutually.

It should be noted that, the present preferred embodiment only describes interactions between two processes. During practical applications, interactions among more than one process all can refer to the interactions between the two processes above, thus realizing management of the whole cluster by more than one process together.

Therefore, the present preferred embodiment can render the following technical effects:
1) the communication is performed between each two of the processes, and when a problem occurs in any one of the processes, other processes can work normally and other services in the cluster are still available.
2) a new process can be added during operation to realize dynamic capacity expansion. A new service function may be added, or a service identical to an existing service may be added to share the load with the existing service.
3) if a service is changed to be available or unavailable, all upper applications can be notified. Therefore, the upper applications can perform processing, e.g. retransmitting data when the service is unavailable to ensure the integrity of the data.
4) the communication among processes in a cluster applies UDP communication. Compared with another cluster technique which applies broadcasting message communication, the broadcasting message requires that all machines should be in a sub-network, and the present solution is not restricted thereby.

It should be noted that, the steps as illustrated in the flowcharts of the accompanying drawings may be implemented by a computer system of a group of computer executable commands for example. In addition, although logical sequences have been illustrated in the flowcharts, the steps as shown or as described may be implemented according to sequences different from those as described herein in some cases.

To sum up, according to the embodiments above of the disclosure, a cluster management system and method are provided. The clustered and distributed design is applied to solve the problem in a related technology that a management process and multiple slave processes are applied in a cluster management system and the whole cluster management system can not work once the management process fails, thus ensuring normal use of services and improving management capability of network management.

Obviously, those skilled in the art should understand that the modules or steps of the disclosure may be implemented by general computing devices and centralized in a single computing device or distributed in a network consisting of multiple computing devices. Optionally, the modules or steps may be implemented by program codes executable by the computing devices, so that they may be stored in a storage device and executed by the computing device, or respectively made into integrated circuit modules or multiple modules or steps in the modules and steps may be made into a single integrated circuit module. By doing so, the disclosure is not limited to any specific combination of hardware and software.

The above are only preferred embodiments of the disclosure and should not be used to limit the disclosure. For those skilled in the art, the disclosure may have various modifications and changes. Any modifications, equivalent replacements, improvements and the like within the principle of the disclosure shall fall within the scope of protection of the disclosure.

## Claims

1. A cluster management system, **characterized by** comprising:
a storage module, configured to store process identifiers of more than one process and communication addresses of the more than one process;
more than one cluster management module in one-to-one correspondence with the more than one process, wherein each one of the more than one cluster management module is configured to obtain from the storage module the communication addresses of other processes except the process corresponding to the cluster management module itself in the more than one process, and obtain services included in the other processes by using the communication addresses of the other processes;
more than one service management module in one-to-one correspondence with the more than one cluster management module, wherein each one of the more than one service management module is configured to obtain services included in the other processes from the cluster management module corresponding to the service management module itself, and call the services included in the other processes.

2. The system according to claim 1, **characterized by** further comprising:
more than one monitoring module in one-to-one correspondence with the more than one service management module and configured to record available information of services included in the other processes and obtained by the service management module corresponding to the monitoring module itself, wherein the available information is configured to indicate that the services included in the other processes are available or unavailable;
each one of the more than one service management module is further configured to receive available information of the monitoring module corresponding to the service management module itself, and further configured to call the services included in the other processes according to the available information.

3. The system according to claim 1, **characterized by** further comprising:
more than one timer in one-to-one correspondence with the more than one cluster management module;
each one of the more than one cluster management module is further configured to, when the timer corresponding to the cluster management module itself expires, send detection messages to other cluster management modules except the cluster management module itself in the more than one cluster management module, wherein the detection messages are configured to detect connection relation between the other cluster management modules and the cluster management module itself; and
each one of the more than one cluster management module is further configured to, when it is detected that a response message or response messages from one or more cluster management modules in the other cluster management modules are not received, delete the process or processes corresponding to the one or more cluster management modules.

4. The system according to claim 1, **characterized in that** each one of the more than one cluster management module is further configured to write the communication address of the process corresponding to the cluster management module itself into the storage module.

5. The system according to claim 1, **characterized by** further comprising:
a determining module, configured to determine whether or not the process identifier or process identifiers of one or more processes in the more than one process have been stored in the storage module;
an updating module, configured to update the communication address or communication addresses of one or more processes when the determination result is yes, wherein the communication address includes at least one of the following: an Internet Protocol (IP) address and monitoring port information.

6. The system according to claim 1, **characterized in that** the more than one cluster management module communicate with each other via User Date Protocol (UDP).

7. The system according to claim 1, **characterized in that** each one of the more than one cluster management module is further configured to manage a service included in a process of the cluster management module corresponding to itself.

8. A cluster management method, **characterized by** comprising:
obtaining, by a cluster management module, communication addresses of other processes except a process corresponding to the cluster management module itself in more than one process from a storage module;
using, by the cluster management module, the communication addresses of the other processes to obtain services included in the other processes, and sending, by the cluster management module, the services to a service management module corresponding to the cluster management module itself;
calling the services included in the other processes by the service management module.

9. The method according to claim 8, **characterized in that** before the service management module calls the services included in the other processes, the method further comprises:
recording, by a monitoring module, available information of services included in the other processes and obtained by the service management module corresponding to the monitoring module itself, wherein the available information is configured to indicate that the services included in the other processes are available or unavailable;
sending the available information to the service management module by the monitoring module;
performing an operation of calling the services included in the other processes according to the available information by the service management module.

10. The method according to claim 8, **characterized in that** before the cluster management module obtains from the storage module the communication addresses of the other processes except the process corresponding to the cluster management module itself in the more than one process, the method further comprises:
when a timer corresponding to the cluster management module itself expires, sending, by the cluster management module, detection messages to other cluster management modules except the cluster management module itself in the more than one cluster management module, wherein the detection messages are configured to detect connection relations between the other cluster management modules and the cluster management module itself;
when it is detected that a response message or response messages from one or more cluster management modules in the other cluster management modules are not received, deleting the process or processes corresponding to one or more cluster management modules by the cluster management module.

11. The method according to claim 8, **characterized in that** before the cluster management module obtains from the storage module the communication addresses of the other processes except the process corresponding to the cluster management module itself in the more than one process, the method further comprises:
writing, by the cluster management module, the communication address of the process corresponding to the cluster management module itself into the storage module.
